# EUROPEAN PATENT APPLICATION

(11) **EP 4 382 487 A1**
(43) Date of publication of application: **12.06.2024**
(21) Application number: 22867737.3
(22) Date of filing: 08.09.2022
(51) Int. Cl.: C01G 53/00, H01M 4/525, H01M 4/505, H01M 10/052, H01M 4/36, H01M 4/62, H01M 4/02

(54) **POSITIVE ELECTRODE ACTIVE MATERIAL, METHOD FOR PREPARING SAME, POSITIVE ELECTRODE INCLUDING SAME, AND LITHIUM SECONDARY BATTERY**

(30) Priority: 10.09.2021 KR 20210121308; 23.12.2021 KR 20210186563
(71) Applicant: LG ENERGY SOLUTION, LTD., Seoul 07335 (KR)
(72) Inventor: HWANG, Jin Tae, Daejeon 34122 (KR); JUNG, Wang Mo, Daejeon 34122 (KR); JO, Chi Ho, Daejeon 34122 (KR); YOO, Tae Gu, Daejeon 34122 (KR); JUNG, Hae Jung, Daejeon 34122 (KR); HEO, Jong Wook, Daejeon 34122 (KR); CHO, Hyeon Jin, Daejeon 34122 (KR)
(74) Representative: Hoffmann Eitle
(86) International application number: PCT/KR2022/013553
(87) International publication number: WO 2023/038469

(57) **Abstract**

The present invention refers to a positive electrode active material and a method for producing the same. The positive electrode active material includes a lithium-nickel-based oxide in the form of single particles, a pseudo-single particles, or mixture thereof, wherein on the surface of the lithium-nickel-based oxide, a number of nickel ions having an oxidation number of +3 or higher is greater than a number of nickel ions having an oxidation number less than +3.

## Description

### TECHNICAL FIELD

This application claims the priority of Korean Patent Application Nos. 10-2021-0121308 filed on September 10, 2021 and 10-2021-0186563 filed on December 23, 2021, in the Korean Intellectual Property Office, the disclosure of which is incorporated by reference herein.

The present invention relates to a positive electrode active material, a method for producing the same, and a positive electrode and a lithium secondary battery both including the positive electrode active material, and more specifically, to a positive electrode active material in the form of at least one of single particles and pseudo-single particles with improved resistance properties, a method for producing the same, and a positive electrode and a lithium secondary battery both including the positive electrode active material.

### BACKGROUND ART

A lithium secondary battery is generally composed of a positive electrode, a negative electrode, a separator, and an electrolyte, and the positive electrode and the negative electrode include active materials capable of intercalation and de-intercalation of lithium ions.

As a positive electrode active material of the lithium secondary battery, a lithium cobalt oxide (LiCoO₂), a lithium nickel oxide (LiNiO₂), a lithium manganese oxide (LiMnO₂, LiMnO₄, or the like), a lithium iron phosphate compound (LiFePO₄), and the like have been used. Among the above, the lithium cobalt oxide is advantageous in that the driving voltage is high and the capacity properties are excellent, but since the price of cobalt, which is a raw material, is high, and the supply thereof is unstable, so that it is difficult to commercially apply the lithium cobalt oxide to a large-capacity battery. The lithium nickel oxide has poor structural stability, so that it is difficult to implement sufficient lifespan properties. Meanwhile, the lithium manganese oxide has excellent stability, but has a problem in that the capacity properties thereof are poor. Therefore, in order to compensate for problems of lithium transition metal oxides including Ni, Co, or Mn alone, lithium composite transition metal oxides including two or more transition metals have been developed, and among them, a lithium nickel cobalt manganese oxide including Ni, Co, and Mn is widely used in the field of electric vehicle batteries.

A typical lithium nickel cobalt manganese oxide is generally in the form of a spherical secondary particle in which tens to hundreds of primary particles are aggregated. However, in the case of a lithium nickel cobalt manganese oxide in the form of a secondary particle in which a large number of primary particles are aggregated, particle breakage easily occurs wherein primary particles are broken off during a roll-pressing process when manufacturing a positive electrode, and there is a problem in that cracks are generated inside particles during a charging and discharging process. When particles of a positive electrode active material are broken or cracked, the contact area with an electrolyte solution increases, so that gas generation and active material deterioration caused by a side reaction with the electrolyte solution increase, resulting in a problem in that lifespan properties are degraded.

In addition, the demand for high-power and high-capacity batteries, such as batteries for electric vehicles, has been increasing in recent years, and accordingly, the nickel content in a positive electrode active material is gradually increasing. When the nickel content in the positive electrode active material increases, initial capacity properties are improved, but when charging and discharging are repeated, the structure of the positive electrode active material collapses, which causes the deterioration rate of the positive electrode active material to increase, resulting in degraded lifespan properties and degraded battery safety.

In order to solve the above problems, a technique for producing a positive electrode active material in the form of single particles rather than a secondary particle by increasing a sintering temperature when preparing a lithium nickel cobalt manganese oxide has been proposed. A positive electrode active material in the form of single particles has a smaller contact area with an electrolyte solution compared to a typical positive electrode active material in the form of a secondary particle, and thus, has fewer side reactions with the electrolyte solution, and has excellent particle strength, so that there is less particle breakage when manufacturing an electrode. Therefore, when a positive electrode active material in the form of single particles is applied, there are advantages in terms of gas generation and lifespan properties.

However, in the case of a typical positive electrode active material in the form of single particles, there are not many interfaces between primary particles which serve as a movement path for lithium ions inside the particle, resulting in a decrease in lithium mobility, and since the typical positive electrode active material is produced at a relatively high sintering temperature, lithium by-products are present in excess on the surface thereof. When the lithium by-products are present in excess on the surface of the positive electrode active material, the amount of gas generated increases due to a side reaction of the lithium by-products and an electrolyte during high-temperature storage. The amount of gas generated may be reduced by removing the lithium by-products through washing with water, but there is a problem in that the surface structure of the positive electrode active material is damaged during the washing, so that resistance increases.

### DISCLOSURE OF THE INVENTION

### TECHNICAL PROBLEM

In order to solve the above problem, the present invention provides a method for producing a positive electrode active material in the form of at least one of single particles and pseudo-single particles, the method capable of effectively removing lithium by-products while suppressing an increase in resistance, and a positive electrode active material produced thereby.

In addition, the present invention provides a positive electrode including the positive electrode active material, and a lithium secondary battery including the positive electrode, thereby having a small amount of gas generated during high-temperature storage and having excellent resistance properties at a low SOC.

### TECHNICAL SOLUTION

According to an aspect of the present invention, there is provided a method for producing a positive electrode active material, the method including (A) sintering a mixture of a transition metal precursor and a lithium raw material to prepare a lithium-nickel-based oxide in the form of at least one of single particles and pseudo-single particles, wherein each single particle consists of one nodule and wherein each pseudo-single particle is a composite of 30 or fewer nodules,(B) milling the lithium-nickel-based oxide, and (C)then sintering the lithium-nickel-based oxide at a temperature of 600°C to 900°C.

According to another aspect of the present invention, there is provided a positive electrode active material including a lithium-nickel-based oxide in the form of at least one of single particles and pseudo-single particles, wherein each single particle consists of one nodule and wherein each pseudo-single particle is a composite of 30 or fewer nodules, wherein on the surface of the lithium-nickel-based oxide, a number of nickel ions having an oxidation number of +3 or higher is greater than a number of nickel ions having an oxidation number less than +3.

According to yet another aspect of the present invention, there is provided a positive electrode including a positive electrode active material layer having a positive electrode active material according to the present invention, and a lithium secondary battery including the positive electrode.

### ADVANTAGEOUS EFFECTS

According to a method for producing a positive electrode active material of the present invention, the method comprises: (A)sintering a mixture of a transition metal precursor and a lithium raw material to prepare a lithium-nickel-based oxide in the form of at least one of single particles or pseudo-single particles,(B) milling the lithium-nickel-based oxide, and (C) then sintering the lithium-nickel-based oxide at a temperature of 600°C to 900°C, so that residual lithium may be effectively removed without performing a process of washing with water. In the case of a high-nickel positive electrode material having a high nickel content of 80 mol% or greater, an excessive amount of lithium by-products is generated during a production process, and when such lithium by-products are present, there is a problem in that an electrolyte solution and the lithium by-products react, resulting in gas generation. Therefore, typically, it has been common to use a high-nickel positive electrode material after removing lithium by-products thereof through a process of washing with water. However, when the process of washing with water is performed, there is a problem in that the oxidation number of Ni on the surface of a positive electrode active material particle is changed to Ni⁺², which is electrically inactive, during the process of washing with water, which leads to an increase in resistance. In the case of a positive electrode active material in the form of a secondary particle, since resistance is not high, there is no big problem even if the resistance is slightly increased through a process of washing with water. However, a positive electrode active material in the form of single particles and/or pseudo-single particles has high resistance, so that when there is an additional increase in resistance through a process of washing with water, there is a problem in that output properties are significantly degraded. Particularly, resistance (hereinafter, referred to as discharge end resistance) in a low SOC region (e.g., a region with SOC 10% or less) is significantly increased, so that it is difficult to apply the positive electrode active material in the form of single particles and/or pseudo-single particles to batteries for electric vehicles which require high-power in a low SOC region. However, according to the method of the present invention, it is possible to effectively remove lithium by-products without a process of washing with water which changes the oxidation number of Ni.

A positive electrode active material of the present invention produced through the above-described method includes a lithium-nickel-based oxide in the form of single particles and/or pseudo-single particles, wherein on the surface of the lithium-nickel-based oxide, a number of nickel ions having an oxidation number of +3 or higher is greater than nickel ions having an oxidation number less than +3. As described above, the positive electrode active material of the present invention has low resistance properties since the number of nickel ions having an oxidation number of +3 or higher, which are electrically active, are greater on the surface of the lithium-nickel-based oxide.

In addition, the positive electrode active material according to the present invention includes a lithium-nickel-based oxide in the form of single particles and/or pseudo-single particles with high particle strength, and thus, has less particle breakage during electrode manufacturing and charging and discharging, and the positive electrode active material has a small amount of residual lithium, which suppresses the generation of side reactions with an electrolyte solution, and thus, when applied to a secondary battery, has a small amount of gas generated and excellent high-temperature lifespan properties.

### BRIEF DESCRIPTION OF THE DRAWINGS

FIG. 1 is a photograph showing the oxidation number distribution of Ni on the surface of a positive electrode active material produced according to Example 1, which is measured through TEM-EELS.
FIG. 2 is a photograph showing the oxidation number distribution of Ni on the surface of a positive electrode active material produced according to Comparative Example 2, which is measured through TEM-EELS.
FIG 3 is a scanning electron microscope image of positive electrode active material produced according to Example 1.
FIG 4 is a scanning electron microscope image of positive electrode active material produced according to Comparative Example 3.
FIG 5 is a scanning electron microscope image of positive electrode active material produced according to Comparative Example 4.
FIG. 6 is a graph showing the comparison of resistance properties according to the state of charge (SOC) of batteries manufactured using positive electrode active materials produced according to Examples 1 ~ 2 and Comparative Examples 1 ~ 4.
FIG. 7 is a graph showing the comparison of changes in cell volume after high-temperature storage of batteries manufactured using positive electrode active materials produced according to Examples 1 ~ 2 and Comparative Examples 1 ~ 4.

### BEST MODE FOR CARRYING OUT THE INVENTION

Hereinafter, the present invention will be described in more detail.

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

In the present invention, "single particle" is a particle consisting of a single nodule. In the present invention, a "pseudo-single particle" refers to a particle which is a composite formed of 30 or less nodules.

A "nodule" according to the present invention refers to particle unit body constituting a single particle and a pseudo-single particle. The nodule may be a single crystal lacking any crystalline grain boundary, or alternatively that may be a polycrystal in which grain boundaries do not appear when observed in a field of view of 5000x to 20000x using a scanning electron microscope (SEM).

In the present invention, a "secondary particle" refers to a particle formed by agglomeration of a plurality several tens to several hundreds of primary particles. More specifically, a secondary particle is an agglomerate of 40 primary particles or more.

In the present invention, when a "particle" is described, any one or all of a single particle, a pseudo-single particle, a primary particle, a nodule, and a secondary particle may be encompassed.

In the present invention, the term "average particle diameter D₅₀" refers to a particle size based on 50% of a volume cumulative particle size distribution of positive electrode active material powder , and when a lithium composite transition metal oxide is a secondary particle, the average particle diameter refers to an average diameter of secondary particles, and when the lithium composite transition metal oxide is a combination of single particles and pseudo-single particles, the average particle diameter refers to an average diameter of a particle in the combination. The average particle diameter D₅₀ may be measured by a laser diffraction method. For example, positive electrode active material powder is dispersed in a dispersion medium, and then introduced into a commercially available laser diffraction particle size measurement device (e.g., Microtrac MT 3000) to be irradiated with an ultrasonic wave of about 28 kHz to an output of 60W. Thereafter, the average particle diameter may be measured by obtaining a volume cumulative particle size distribution graph, and then obtaining a particle size corresponding to 50% of a volume cumulative amount.

In the present invention, an "average crystalline grain size" is measured by analyzing XRD data, which is obtained by performing X-ray diffraction analysis on positive electrode active material powder, by the Rietveld refinement method. At this time, the X-ray diffraction analysis was performed by, using Bruker D8 Endeavor (light source: Cu-Kα, λ=1.54Å) equipped with a LynxEye XE-T-position sensitive detector, putting a sample into a groove of a general powder holder, and then evenly leveling the surface of the sample using a slide glass, followed by filling the groove with the sample such that the height of the sample is the same as the height of the edge of the holder, under the conditions of step size=0.02° and total scan time=about 20 minutes for a FDS 0.5°and 2θ=15° to 90° region. For the measured data, the Rietveld refinement was performed in consideration of charge (+3 for metals at transition metal sites, +2 for Ni at Li sites) and cation mixing at each site. Specifically, for instrumental broadening at the time of grain size analysis, Fundamental Parameter Approach (FPA) implemented in the Bruker TOPAS program was used, and when fitting, all the peaks in the measurement range were used. The peak shape was fitted using only Lorenzian contribution as the First Principle (FP) among peak types available in the TOPAS, and strain was not considered.

In the present invention, the Electron Energy Loss Spectroscopy measurement was performed through the following method. A positive electrode active material to be measured was milled to a thickness of about 80 nm using a Focused Ion Beam (FIB) device, and then the spectrum was obtained for 30 minutes under the 200 kV acceleration voltage condition.

### Method for producing positive electrode active material

First, a method for producing a positive electrode active material according to the present invention will be described.

The method for producing a positive electrode active material according to the present invention includes (A) sintering a mixture of a transition metal precursor and a lithium raw material to prepare a lithium-nickel-based oxide in the form of at least one of single particles and pseudo-single particle, wherein each single particle consists of one nodule and wherein each pseudo-single particle is a composite of 30 or fewer nodules,(B) milling the lithium-nickel-based oxide, and (C) then sintering the lithium-nickel-based oxide at a temperature of 600°C to 900°C.

### (A) Step of preparing lithium-nickel-based oxide

First, a transition metal precursor and a lithium raw material are mixed, and then the mixture is subjected to sintering to prepare a lithium-nickel-based oxide in the form of at least one of single particles and pseudo-single particles.

At this time, the transition metal precursor may be a commercially available precursor, such as a nickel-cobalt-manganese-based hydroxide or the like, purchased and used, or may be prepared according to a method for preparing a precursor, the method known in the art.

Preferably, the transition metal precursor used in the present invention may be a transition metal hydroxide including nickel and cobalt and having a Ni content of 80 mol% or greater in all transition metals, and more preferably, may be a nickel-cobalt-manganese hydroxide having a Ni content of 80 mol% or greater. When the content of nickel in the transition metal precursor satisfies the above range, high capacity properties may be implemented.

Specifically, the transition metal precursor may be represented by Formula 2 below.

[Formula 2] NiₓCo_{y}M¹_{z}M²_{w}(OH)₂

In Formula 2 above, M¹ is Mn, Al, or a combination thereof, and preferably, Mn, or a combination of Mn and Al.

M² is one or more selected from the group consisting of Zr, W, Y, Ba, Ca, Ti, Mg, Ta, and Nb, and preferably, may be one or more selected from the group consisting of Zr, Y, Mg, and Ti, and more preferably, may be Zr, Y, or a combination thereof.

x represents the molar ratio of nickel in all metals in the precursor, wherein the x may satisfy 0.8≤x<1, 0.82≤x<1, or 0.83≤x<1. When the molar ratio of nickel satisfies the above range, high energy density is exhibited to implement high capacity.

y represents the molar ratio of cobalt in all metals in the precursor, wherein the y may satisfy 0<y<0.2, 0<y<0.18, or 0.01≤y≤0.17. When the molar ratio of cobalt satisfies the above range, good resistance properties and output properties may be implemented.

z represents the molar ratio of an M¹ element in all metals in the precursor, wherein the z may satisfy 0<z<0.2, 0<z<0.18, or 0.01≤z≤0.17. When the molar ratio of the M¹ element satisfies the above range, the structural stability of a positive electrode active material is exhibited to be excellent.

w represents the molar ratio of an M² element in all metals in the precursor, wherein the w may satisfy 0≤w≤0.1, or 0≤w≤0.05.

For example, the transition metal precursor may be prepared by performing a co-precipitation reaction while introducing a transition metal aqueous solution, an ammonium cation complex forming agent, and a basic compound to a reactor, followed by stirring the mixture.

The transition metal aqueous solution may be prepared by dissolving a transition metal-containing raw material in a solvent such as water, and for example, may be prepared by dissolving a nickel-containing raw material and a cobalt-containing raw material in water. In addition, if necessary, the transition metal aqueous solution may further include an M¹-containing raw material and/or an M²-containing raw material.

Meanwhile, the transition metal-containing raw material may be an acetate, a carbonate, a nitrate, a sulfate, a halide, a sulfide, an oxide, or the like of a transition metal.

Specifically, the nickel-containing raw material may be, for example, NiO, NiCO₃·2Ni(OH)₂·4H₂O, NiC₂O₂·2H₂O, Ni(NO₃)₂·6H₂O, NiSO₄, NiSO₄·6H₂O, a nickel halide, or a combination thereof.

The cobalt-containing raw material may be, for example, CoSO₄, Co(OCOCH₃)₂·4H₂O, Co(NO₃)₂·6H₂O, CoSO₄·7H₂O, or a combination thereof.

The M¹-containing raw material may be a manganese-containing raw material and/or an aluminum-containing raw material. The manganese-containing raw material may be, for example, Mn₂O₃, MnO₂, Mn₃O₄, MnCO₃, Mn(NO₃)₂, MnSO₄ ·H₂O, a manganese acetate, a manganese halide, or a combination thereof, and the aluminum-containing raw material may be, for example, Al₂O₃, Al(OH)₃, Al(NO₃)₃, Al₂(SO₄)₃, (HO)₂AlCH₃CO₂, HOAl(CH₃CO₂)₂, Al(CH₃CO₂)₃, an aluminum halide, or a combination thereof. However, in the case of Al, the Al is not added to a transition metal aqueous solution, and may be introduced together with a lithium raw material in a sintering step to be described later.

The M²-containing raw material may be an acetate, a carbonate, a nitrate, a sulfate, a halide, a sulfide, an oxide, or the like of an M² metal.

The input amount of each transition metal-containing raw material may be determined in consideration of the molar ratio of a transition metal in a positive electrode active material to be finally produced.

Meanwhile, the ammonium cation complex forming agent may include at least one compound selected from the group consisting of NH₄OH, (NH₄)₂SO₄, NH₄NO₃, NH₄Cl, CH₃COONH₄, and NH₄CO₃, and the compound may be introduced into a reactor in the form of a solution in which the compound is dissolved in a solvent. At this time, the solvent may be water, or a mixture of an organic solvent (for example, an alcohol, etc.) which may be uniformly mixed with water and water.

The basic compound may be at least one compound selected from the group consisting of NaOH, KOH, and Ca(OH)₂, and the compound may be introduced into a reactor in the form of a solution in which the compound is dissolved in a solvent. At this time, as the solvent, water, or a mixture of an organic solvent (for example, an alcohol, etc.) which may be uniformly mixed with water and water may be used.

When the transition metal aqueous solution, the ammonium cation complex forming agent, and the basic compound are introduced into a reactor and stirred as described above, transition metals in the transition metal aqueous solution are co-precipitated to generate precursor particles in the form of transition metal hydroxides.

At this time, the transition metal aqueous solution, the ammonium cation complex forming agent, and the basic compound are introduced in an amount such that the pH of a reaction solution is within a desired range.

When the precursor particles are formed by the method described above, particles are separated from the reaction solution to obtain a transition metal precursor. For example, the precursor particles are separated from the reaction solution by filtering the reaction solution, and then the separated precursor particles may be washed with water and dried to obtain a transition metal precursor. At this time, if necessary, a process such as pulverization and/or classification may be performed.

Next, the transition metal precursor and a lithium raw material are mixed, and then the mixture is subjected to primary sintering to prepare a lithium-nickel-based oxide in the form of at least one of single particles and pseudo-single particles. At this time, if necessary, the M¹-containing raw material and/or the M²-containing raw material may be mixed together and then sintered, and specific examples of the M¹-containing raw material and/or the M²-containing raw material are the same as described above.

As the lithium raw material, a lithium-containing sulfate, nitrate, acetate, carbonate, oxalate, citrate, halide, hydroxide, or oxyhydroxide may be used, and for example, Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a mixture thereof may be used.

Meanwhile, the lithium raw material and a positive electrode active material precursor may be mixed such that the molar ratio of Li : all metals in the precursor is 1 : 1 to 1.1 : 1, preferably 1.02 : 1 to 1.05 : 1. When the mixing ratio of the lithium raw material and the metals in the positive electrode active material precursor satisfies the above range, a layered crystal structure of a positive electrode active material is well developed, so that the positive electrode active material having excellent capacity properties and structural stability may be produced.

Meanwhile, the sintering is performed at a temperature at which single particles and/or pseudo-single particles may be formed. In order to form single particles and/or pseudo-single particles, sintering should be performed at a temperature higher than the temperature at which a typical lithium-nickel-based oxide in the form of a secondary particle is prepared, and for example, when the composition of precursor is the same, the sintering should be performed at a temperature about 30°C to 100°C higher than the temperature at which the typical lithium-nickel-based oxide in the form of a secondary particle is prepared. The sintering temperature for the formation of single particles and/or pseudo-single particles may vary depending on a metal composition in a precursor. For example, when a high-nickel lithium-nickel-based oxide having a nickel (Ni) content of 80 mol% or greater is formed as a single particle or a pseudo-single particle, the temperature for primary sintering may be about 800°C to 1000°C, preferably 800°C to 950°C, and more preferably 800°C to 900°C. When the sintering temperature satisfies the above range, a lithium-nickel-based oxide in the form of single particles and/or pseudo-single particles having excellent electrochemical properties may be prepared. When the sintering temperature is lower than 800°C, a positive electrode active material in the form of a secondary particle is prepared, and when higher than 1000°C, due to excessive sintering, a layered crystal structure is not formed properly, so that the electrochemical properties are degraded.

In addition, the sintering may be performed under an oxygen atmosphere for 6 hours to 35 hours, preferably 6 hours to 20 hours, and more preferably 6 hours to 12 hours. When the primary sintering duration satisfies the above range, a lithium-nickel-based oxide in the form of a single particles and/or a pseudo-single particle may be formed. When the primary sintering duration is as short as less than 6 hours, particle growth is insufficient to form a lithium-nickel-based oxide in the form of a secondary particle. When the sintering duration is too long, the electrochemical properties of the active material may be deteriorated due to generation of rock salt phase.

In the present specification, the oxygen atmosphere means an atmosphere in which oxygen in an amount sufficient for sintering is included, including an atmospheric atmosphere. Particularly, it is preferable that the sintering is performed in an atmosphere in which the oxygen partial pressure is higher than that of the atmospheric atmosphere.

The lithium-nickel-based oxide prepared through the sintering as described above is in the form of single particles consisting of one nodule and/or in the form of pseudo-single particles, which is a composite of 30 or fewer, preferably 2 to 20, and more preferably 2 to 10 nodules.

In addition, the lithium-nickel-based oxide particle may have a composition in which the content of nickel in all metals except lithium is 80 mol% or greater, preferably 82 mol% or greater, and more preferably 83 mol% or greater, and specifically, the lithium-nickel-based oxide may be a lithium-nickel-cobalt-manganese-based oxide having a content of nickel in all metals except lithium of 80 mol% or greater, preferably 82 mol% or greater, and more preferably 83 mol% or greater. When the content of nickel in the lithium-nickel-based oxide particle satisfies the above range, high energy density may be implemented.

More specifically, the lithium-nickel-based oxide particle may have a composition represented by Formula 1 below.

[Formula 1] LiₐNi_{b}Co_{c}M¹_{d}M²ₑO₂

In Formula 1 above, M¹ may be Mn, Al, or a combination thereof, and preferably, Mn, or Mn and Al.

M² is one or more selected from the group consisting of Zr, W, Y, Ba, Ca, Ti, Mg, Ta, and Nb, and preferably, may be one or more selected from the group consisting of Zr, Y, Mg, and Ti, and more preferably, may be Zr, Y, or a combination thereof. An M² element is not necessarily included, but when included in an appropriate amount, the M² element may serve to promote grain growth during sintering or improve crystal structure stability.

'a' represents the molar ratio of lithium in the lithium-nickel-based oxide, wherein the a may satisfy 0.8≤a≤1.2, 0.85≤a≤1.15, or 0.9≤a≤1.2. When the molar ratio of lithium satisfies the above range, the crystal structure of the lithium-nickel-based oxide may be stably formed.

`b' represents the molar ratio of nickel in all metals except lithium in the lithium-nickel-based oxide, wherein the b may satisfy 0.8≤b<1, 0.82≤b<1, or 0.83≤b<1. When the molar ratio of nickel satisfies the above range, high energy density is exhibited to implement high capacity.

'c' represents the molar ratio of cobalt in all metals except lithium in the lithium-nickel-based oxide, wherein the c may satisfy 0<c<0.2, 0<c<0.18, or 0.01≤c≤0.17. When the molar ratio of cobalt satisfies the above range, good resistance properties and output properties may be implemented.

'd' represents the molar ratio of an M¹ element in all metals except lithium in the lithium-nickel-based oxide, wherein the d may satisfy 0<d<0.2, 0<d<0.18, or 0.01≤d≤0.17. When the molar ratio of the M¹ element satisfies the above range, the structural stability of a positive electrode active material is exhibited to be excellent.

'e' represents the molar ratio of an M² element in all metals except lithium in the lithium-nickel-based oxide, wherein the e may satisfy 0≤e≤0.1, or 0≤e≤0.05.

### (B): milling step

After step (A), the lithium-nickel-based oxide is subjected to milling. The milling is to remove large particles and obtain a desired average particle size. During the high-temperature sintering of step (A), agglomeration and/or cohesion between adjacent particles may occur to generate large particles, which leads to deterioration of rolling properties. Therefore, in the present invention, by performing the milling process, it is possible to remove the large particles and finally to form a lithium nickel-based oxide having a desired average particle diameter. In addition, when the secondary sintering is performed without a milling process, the effect of removing lithium by-products cannot be obtained.

The milling may be performed by a general milling method known in the art, for example, a jet-mill method. For example, the milling may be performed under the conditions of a crushing pressure 1 to 2 bar, a Classifier speed 500 ~ 3000rpm, and the feed rate 2000 ~ 6000g / hr.

Preferably, the milling may be performed under a low moisture atmosphere, for example, dry air (dry air) atmosphere. When the lithium nickel-based oxide is exposed to moisture, the generation of lithium by-products may increase and the surface properties of the active material may be deteriorated.

### (C) Secondary sintering step

Next, the lithium-nickel-based oxide in the form of single particles and/or pseudo-single particles prepared through the sintering in step (A) and milling in step (B) is subjected to secondary sintering.

At this time, the secondary sintering temperature may be about 600°C to 900°C, preferably 600°C to 800°C, and more preferably 650°C to 750°C. When the secondary sintering temperature satisfies the above range, lithium by-products may be effectively removed while minimizing an increase in initial resistance. When the secondary sintering temperature is lower than 600°C, lithium by-products are not sufficiently removed, and when higher than 900°C, the crystal structure of the lithium-nickel-based oxide is changed by the secondary sintering, so that electrochemical properties may be degraded. Meanwhile, in terms of resistance reduction, it is more preferable that the secondary sintering temperature is 800°C or lower. This is because when the secondary sintering temperature is higher than 800°C, the formation of a rock salt phase on a surface may increase, so that the effect of improving resistance properties may be reduced.

In addition, the secondary sintering may be performed under an oxygen atmosphere for 2 hours to 10 hours, preferably for 4 hours to 6 hours. When the secondary sintering duration increases, the formation of a rock salt phase on the surface increases, so that the effect of improving resistance properties may be reduced.

When the secondary sintering is performed under the conditions as described above, lithium by-products remaining on the surface of the lithium-nickel-based oxide are decomposed by heat and are diffused into the lithium-nickel-based oxide, so that the amount of lithium remaining on the surface is reduced, and lithium ions and the surface of the lithium-nickel-based oxide react, thereby forming a stable layered structure, so that the surface structure of the lithium-nickel-based oxide is stabilized.

Meanwhile, it is preferable that the method for producing a positive electrode active material according to the present invention does not include a process of washing with water. Typically, when preparing a high-Ni NCM-based lithium-nickel-based oxide having a nickel (Ni) content of 80 mol% or greater, it has been common to perform a process of washing with water after sintering in order to reduce the content of lithium by-products. However, according to the studies of the present inventors, when the process of washing with water is performed during the production of a positive electrode active material in the form of single particles and/or pseudo-single particles, the oxidation number of Ni on the surface of a lithium-nickel-based oxide is changed, resulting in generating a large amount of Ni⁺², which is electrically inactive, and accordingly, resistance increases. Therefore, when producing a positive electrode active material of the present invention, washing with water is not performed, and secondary sintering is performed at a temperature of 600 to 800°C to allow residual lithium on the surface of a lithium-nickel-based oxide to be consumed, so that resistance properties are improved.

### Positive electrode active material

Next, a positive electrode active material according to the present invention will be described.

The positive electrode active material according to the present invention includes a lithium-nickel-based oxide in the form of single particles and/or a pseudo-single particles, and is characterized in that on the surface of the lithium-nickel-based oxide, a number of nickel ions having an oxidation number of +3 or higher are greater than a number of nickel ions having an oxidation number less than +3. The positive electrode active material according to the present invention may be produced according to the above-described production method of the present invention.

The lithium-nickel-based oxide particle is single particles consisting of one nodule and/or pseudo-single particles, which are composites of 30 or fewer, preferably 2 to 20, and more preferably 2 to 10 nodules.

The lithium-nickel-based oxide particle in the form of single particles and/or pseudo-single particles has higher particle strength than a typical lithium-nickel-based oxide in the form of a secondary particle in which tens to hundreds of primary particles are aggregated, and thus, there is less particle breakage during roll-pressing.

In addition, the lithium-nickel-based oxide in the form of single particles and/or pseudo-single particles according to the present invention has a small number of nodules constituting the particle, so that there is not much of a change due to volume expansion and contraction of the nodules during charging and discharging, and accordingly, the generation of cracks inside the particles is also significantly reduced.

Meanwhile, the lithium-nickel-based oxide particle may have a composition in which the content of nickel in all metals except lithium is 80 mol% or greater, preferably 82 mol% or greater, and more preferably 83 mol% or greater, and specifically, the lithium-nickel-based oxide may be a lithium-nickel-cobalt-manganese-based oxide having a content of nickel in all metals except lithium of 80 mol% or greater, preferably 82 mol% or greater, and more preferably 83 mol% or greater. When the content of nickel in the lithium-nickel-based oxide particle satisfies the above range, high energy density may be implemented.

More specifically, the lithium-nickel-based oxide particle may have a composition represented by Formula 1 below.

[Formula 1] LiₐNi_{b}Co_{c}M¹_{d}M²ₑO₂

In Formula 1 above, M¹ may be Mn, Al, or a combination thereof, and preferably, Mn, or Mn and Al.

M² is one or more selected from the group consisting of Zr, W, Y, Ba, Ca, Ti, Mg, Ta, and Nb, and preferably, may be one or more selected from the group consisting of Zr, Y, Mg, and Ti, and more preferably, may be Zr, Y, or a combination thereof. An M² element is not necessarily included, but when included in an appropriate amount, the M² element may serve to promote grain growth during sintering or improve crystal structure stability.

'a' represents the molar ratio of lithium in the lithium-nickel-based oxide, wherein the a may satisfy 0.8≤a≤1.2, 0.85≤a≤1.15, or 0.9≤a≤1.2. When the molar ratio of lithium satisfies the above range, the crystal structure of the lithium-nickel-based oxide may be stably formed.

'b' represents the molar ratio of nickel in all metals except lithium in the lithium-nickel-based oxide, wherein the b may satisfy 0.8≤b<1, 0.82≤b<1, or 0.83≤b<1. When the molar ratio of nickel satisfies the above range, high energy density is exhibited to implement high capacity.

'c' represents the molar ratio of cobalt in all metals except lithium in the lithium-nickel-based oxide, wherein the c may satisfy 0<c<0.2, 0<c<0.18, or 0.01≤c≤0.17. When the molar ratio of cobalt satisfies the above range, good resistance properties and output properties may be implemented.

'd' represents the molar ratio of an M¹ element in all metals except lithium in the lithium-nickel-based oxide, wherein the d may satisfy 0<d<0.2, 0<d<0.18, or 0.01≤d≤0.17. When the molar ratio of the M¹ element satisfies the above range, the structural stability of a positive electrode active material is exhibited to be excellent.

'e' represents the molar ratio of an M² element in all metals except lithium in the lithium-nickel-based oxide, wherein the e may satisfy 0≤e≤0.1, or 0≤e≤0.05.

Meanwhile, the lithium-nickel-based oxide of the present invention prepared by performing secondary sintering without performing a process of washing with water has a small amount of Ni⁺², which is electrically inactive, on the surface thereof. Specifically, on the surface of the lithium-nickel-based oxide of the present invention, a number of nickel ions having an oxidation number of +3 or higher is great than a number of nickel ions having an oxidation number less than +3, and as a result, excellent resistance properties are exhibited. The oxidation number on the surface of the lithium-nickel-based oxide may be confirmed through Electron Energy Loss Spectroscopy.

In addition, since residual lithium present on the surface of the lithium-nickel-based oxide is removed during the secondary sintering process, the positive electrode active material according to the present invention has a small amount of residual lithium. Specifically, the positive electrode active material according to the present invention may have an amount of residual lithium of 0.5 wt% or less, preferably 0.01 to 0.5 wt%, and more preferably 0.01 to 0.4 wt%. Since the amount of residual lithium is small, the occurrence of a phenomenon in which residual lithium reacts with an electrolyte solution during charging and discharging and/or at high temperatures, thereby generating a gas may be minimized, and accordingly, excellent lifespan properties may be implemented.

Meanwhile, the positive electrode active material according to the present invention may have an average particle diameter of nodules of 0.5 um to 3 um, preferably 0.8 um to 2.5 µm, and more preferably 0.8 um to 1.5 um. When the average particle diameter of nodules satisfies the above range, a positive electrode active material in the form of single particles and/or pseudo-single particles having excellent electrochemical properties may be formed. When the average particle diameter of nodules is too small, the number of aggregates of the nodules forming lithium-nickel-based oxide particles increases, so that the effect of suppressing the occurrence of particle breakage during roll-pressing is reduced, and when the average particle diameter of nodules is too large, a lithium diffusion path inside a nodule becomes longer to increase resistance and degrade output properties.

Also, the positive electrode active material may have an average particle diameter D₅₀ of 2 um to 6 um, preferably 2 um to 5 µm, and more preferably 3 um to 5 um. When the D₅₀ of the positive electrode active material is too small, it is difficult to form an active material layer when manufacturing an electrode, and electrolyte solution wettability is lowered, thereby degrading electrochemical properties, and when the D₅₀ is too large, there is a problem in that resistance increases and output properties are degraded.

In addition, the positive electrode active material may have an average crystallite size of 150 nm to 300 nm, 200 nm to 280 nm, or 200 nm to 250 nm. When the average crystallite size satisfies the above range, the generation of a rock salt phase is reduced when preparing a lithium nickel-based oxide, so that a positive electrode active material in the form of single particles and/or pseudo-single particles having excellent resistance properties may be produced. In general, a positive electrode active material in the form of single particles and/or pseudo-single particles is produced by increasing a sintering temperature, thereby increasing the size of a nodule, but when only the size of the nodule is increased whereas the size of a crystallite remains small, there is a problem in that a rock salt phase is formed on the surface of the nodule, so that resistance increases. However, when the average crystallite size and the average particle diameter of the nodule are increased together, it is possible to obtain effects of minimizing the formation of a rock salt phase and suppressing the resistance increase.

### Positive electrode

Next, a positive electrode according to the present invention will be described.

The positive electrode according to the present invention includes a positive electrode active material layer having the positive electrode active material according to the present invention. Specifically, the positive electrode includes a positive electrode current collector and a positive electrode active material layer formed on the positive electrode current collector and including the positive electrode active material.

In the positive electrode, the positive electrode current collector is not particularly limited as long as it has conductivity without causing a chemical change in a battery. For example, stainless steel, aluminum, nickel, titanium, fired carbon, or aluminum or stainless steel that is surface-treated with one of carbon, nickel, titanium, silver, and the like may be used. Also, the positive electrode current collector may typically have a thickness of 3 to 500 µm, and microscopic irregularities may be formed on the surface of the positive electrode current collector to improve the adhesion of the positive electrode active material. For example, the positive electrode current collector may be used in various forms such as a film, a sheet, a foil, a net, a porous body, a foam, and a non-woven body.

In addition, the positive electrode active material layer may include a conductive material and a binder, together with the positive electrode active material described above.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, carbon fiber, and a carbon nanotube; metal powder or metal fiber of such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be typically included in an amount of 1 to 30 wt%, preferably 1 to 20 wt%, and more preferably 1 to 10 wt% based on the total weight of a positive electrode active material layer.

The binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used. The binder may be included in an amount of 1 to 30 wt%, preferably 1 to 20 wt%, and more preferably 1 to 10 wt% based on the total weight of the positive electrode active material layer.

The positive electrode may be manufactured according to a typical method for manufacturing a positive electrode. For example, the positive electrode may be manufactured by mixing a positive electrode active material, a binder, and/or a conductive material in a solvent to prepare a positive electrode slurry, and applying the positive electrode slurry on a positive electrode current collector, followed by drying and roll-pressing.

The solvent may be a solvent commonly used in the art, and may be dimethyl sulfoxide (DMSO), isopropyl alcohol, N-methylpyrrolidone (NMP), acetone, water, or the like. Any one thereof or a mixture of two or more thereof may be used. The solvent may be used in an amount sufficient to dissolve or disperse the positive electrode active material, the conductive material, and the binder in consideration of the application thickness and preparation yield of the slurry, and to allow the slurry to have a viscosity which may exhibit excellent thickness uniformity when applied for the manufacturing of a positive electrode layer.

In another method, the positive electrode may be manufactured by casting the positive electrode slurry on a separate support and then laminating a film peeled off from the support on a positive electrode current collector.

### Lithium secondary battery

Next a lithium secondary battery according to the present invention will be described.

The lithium secondary battery of the present invention includes the positive electrode according to of the present invention. Specifically, the lithium secondary battery includes a positive electrode, a negative electrode positioned opposing the positive electrode, a separator interposed between the positive electrode and the negative electrode, and an electrolyte, wherein the positive electrode is the same as described above. Also, the lithium secondary battery may selectively further include a battery case for accommodating an electrode assembly composed of the positive electrode, the negative electrode, and the separator, and a sealing member for sealing the battery case.

In the lithium secondary battery, the negative electrode includes a negative electrode current collector and a negative electrode active material layer disposed on the negative electrode current collector.

The negative electrode current collector is not particularly limited as long as it has a high conductivity without causing a chemical change in a battery. For example, copper, stainless steel, aluminum, nickel, titanium, fired carbon, copper or stainless steel that is surface-treated with one of carbon, nickel, titanium, silver, and the like, an aluminum-cadmium alloy, and the like may be used. Also, the negative electrode current collector may typically have a thickness of 3-500 µm, and as in the case of the positive electrode current collector, microscopic irregularities may be formed on the surface of the negative electrode current collector to improve the adhesion of a negative electrode active material. For example, the negative electrode current collector may be used in various forms such as a film, a sheet, a foil, a net, a porous body, a foam, a non-woven body, and the like.

The negative electrode active material layer selectively includes a binder and a conductive material in addition to the negative electrode active material.

As the negative electrode active material, a compound capable of reversible intercalation and de-intercalation of lithium may be used. Specific examples of the negative electrode active material may include a carbonaceous material such as artificial graphite, natural graphite, graphitized carbon fiber, and amorphous carbon; a metallic material alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as SiO_{β}(0<β< 2), SnO₂, a vanadium oxide, and a lithium vanadium oxide; or a composite including the metallic material and the carbonaceous material such as an Si-C composite or an Sn-C composite, and any one thereof or a mixture of two or more thereof may be used.

Also, a metal lithium thin film may be used as the negative electrode active material. Furthermore, low crystalline carbon, high crystalline carbon and the like may all be used as a carbon material. Representative examples of the low crystalline carbon may include soft carbon and hard carbon, and representative examples of the high crystalline carbon may include irregular, planar, flaky, spherical, or fibrous natural graphite or artificial graphite, Kish graphite, pyrolytic carbon, mesophase pitch-based carbon fiber, meso-carbon microbeads, mesophase pitches, and high-temperature sintered carbon such as petroleum or coal tar pitch derived cokes.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, carbon fiber, and a carbon nanotube; metal powder or metal fiber of such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be typically included in an amount of 1 to 30 wt%, preferably 1 to 20 wt%, and more preferably 1 to 10 wt% based on the total weight of a negative electrode active material layer.

The binder serves to improve the bonding between negative electrode active material particles and the adhesion between the negative electrode active material and the negative electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used. The binder may be included in an amount of 1 to 30 wt%, preferably 1 to 20 wt%, and more preferably 1 to 10 wt% based on the total weight of the negative electrode active material layer.

As an example, the negative electrode active material layer may be prepared by applying a negative electrode slurry including a negative electrode active material, and selectively a binder and a conductive material on a negative electrode current collector, following by drying, or may be prepared by casting the negative electrode slurry on a separate support, and then laminating a film peeled off from the support on a negative electrode current collector.

Meanwhile, in the lithium secondary battery, a separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Furthermore, a coated separator including a ceramic component or a polymer material may be used to secure heat resistance or mechanical strength, and may selectively be used in a single-layered or multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a lithium secondary battery, but is not limited thereto.

Specifically, the electrolyte may include an organic solvent and a lithium salt.

Any organic solvent may be used as the organic solvent without particular limitation as long as it may serve as a medium through which ions involved in an electrochemical reaction of the battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among the above solvents, a carbonate-based solvent is preferable, and a mixture of a cyclic carbonate (e.g., ethylene carbonate or propylene carbonate) having high ionic conductivity and high dielectric constant, which may increase charging/discharging performance of the battery, and a low-viscosity linear carbonate-based compound (e.g., ethylmethyl carbonate, dimethyl carbonate, or diethyl carbonate) is more preferable.

Any compound may be used as the lithium salt without particular limitation as long as it may provide lithium ions used in a lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 to 5.0 M, preferably 0.1 M to 3.0 M. When the concentration of the lithium salt is in the above range, the electrolyte has suitable conductivity and viscosity, thereby exhibiting excellent performance, and lithium ions may effectively move.

For purposes of improving the lifespan properties of a battery, suppressing the reduction in battery capacity, improving the discharge capacity of the battery, and the like, the electrolyte may additionally include an additive in addition to the above electrolyte components. For example, as the additive, a haloalkylene carbonate-based compound such as difluoroethylene carbonate or the like, pyridine, triethylphosphite, triethanolamine, cyclic ether, ethylene diamine, n-glyme, hexamethylphosphate triamide, a nitrobenzene derivative, sulfur, a quinone imine dye, N-substituted oxazolidinone, N,N-substituted imidazolidine, ethylene glycol dialkyl ether, ammonium salt, pyrrole, 2-methoxy ethanol, aluminum trichloride, or the like may be used alone or in combination, but the additive is not limited thereto. The additive may be included in an amount of 0.1 to 10 wt%, Preferably 0.1 to 5 wt% based on the total weight of the electrolyte.

The lithium secondary battery including the positive electrode active material according to the present invention as described above not only has an excellent initial capacity and lifespan properties, but also has low discharge end resistance measured in a region with low SOC, particularly with SOC 10% or less, and thus, may be usefully used in the field of electric vehicles.

### MODE FOR CARRYING OUT THE INVENTION

Hereinafter, embodiments of the present invention will be described in detail so that those skilled in the art may easily carry out the present invention. However, the present invention may be embodied in many different forms, and is not limited to the embodiments set forth herein.

### Example 1

A transition metal precursor Ni_{0.83}Co_{0.11}Mn_{0.06}(OH)₂ and LiOH·H₂O were mixed such that the molar ratio of a transition metal (Ni+Co+Mn) : Li was 1 : 1.05, and the mixture was heated to 850°C at a temperature increase rate of 5°C/min, maintained at 850°C for 10 hours, and cooled to room temperature at a temperature reduction rate of 5°C/min to prepare a lithium-nickel-based oxide(step (A)). Then, the lithium-nickel-based oxide was milled for 30minutes under the conditions of a grinding pressure of 1.5bar, a classification speed of 1500rpm and feed rate of 3000g/hour(step (B)).

Next, the lithium nickel-based oxide was heated to 700°C at a temperature increase rate of 5°C/min, maintained at 700°C for 5 hours, and cooled to room temperature at a temperature reduction rate of 5°C/min to prepare a positive electrode active material(step (C)).

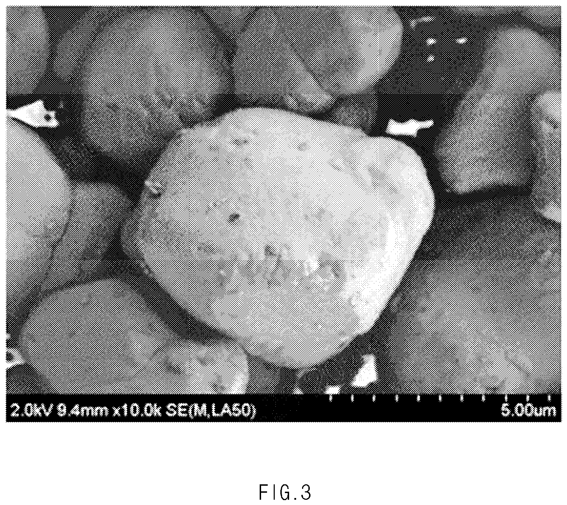

FIG. 3 is a scanning electron microscope image of the positive electrode active material prepared by the above method. FIG. 3 shows that the positive electrode active material prepared in Example 1 has a form of single particle.

### Example 2

A positive electrode active material was produced in the same manner as in Example 1 except that the heating was performed to 850°C in step (C). The positive electrode active material has a form of single particle.

### Comparative Example 1

A positive electrode active material was produced in the same manner as in Example 1 except that step (c) was not performed. The positive electrode active material has a form of single particle.

### Comparative Example 2

A positive electrode active material was produced in the same manner as in Example 1 except that washing process was performed instead of step (c), and wherein the washing process performed that lithium nickel-based oxide mixed with water such that a weight ratio of lithium nickel-based oxide: water was 1:1, and the mixture was stirred to be washed with water, filtered, and then dried. The prepared positive electrode active material has a form of single particle.

### Comparative Example 3

A positive electrode active material was produced in the same manner as in Example 1 except that the mixture was heated to 850°C, maintained at 850°C for 15 hours in step (A) and step (c) was not performed.

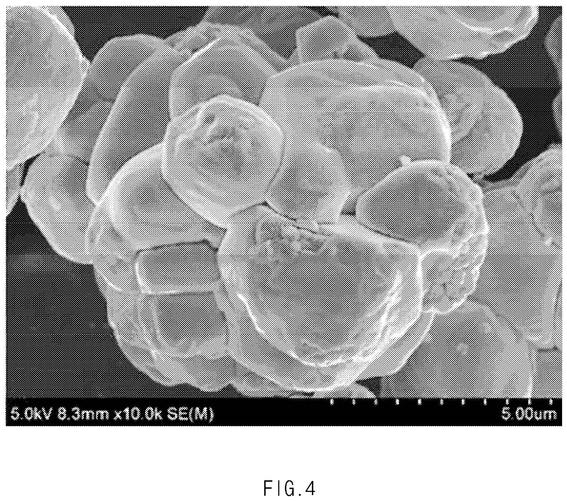

FIG. 4 is a scanning electron microscope image of the positive electrode active material prepared by the above method. FIG. 4 shows that the positive electrode active material prepared in Comparative Example 3 has a form of pseudo-single particle in which about 15 to 30 nodules are complexed.

### Comparative Example 4

A positive electrode active material was produced in the same manner as in Example 1 except that temperature maintenance time after heating to 850°C was 5hours in step (A) and that temperature maintenance time after heating to 700°C was 10hours in step (C).

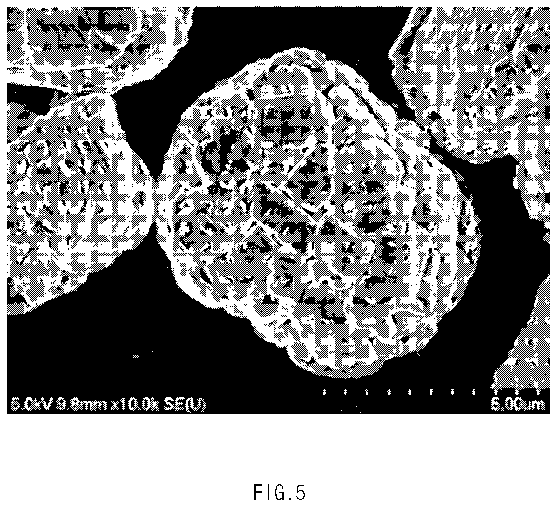

FIG. 5 is a scanning electron microscope image of the positive electrode active material prepared by the above method. FIG. 5 shows that the positive electrode active material prepared in Comparative Example 4 has a form of a secondary particle in which 40 or more of primary particles are aggregated.

### Experimental Example 1: Analysis of Ni oxidation number

The surface of the positive electrode active material produced in each of Example 1 and Comparative Example 2 was analyzed with TEM-EELS to confirm the oxidation number distribution of Ni on the surface.

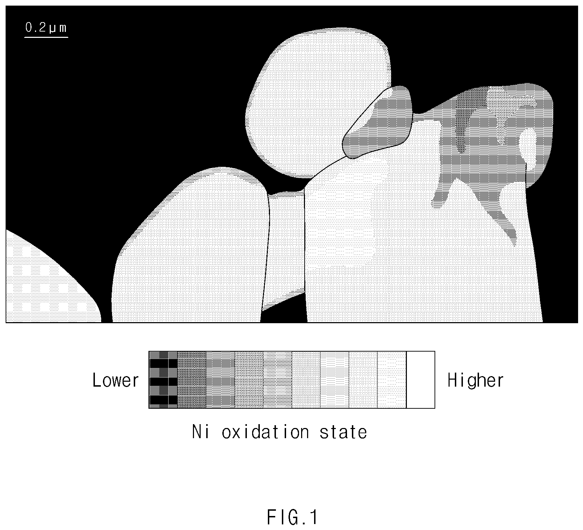

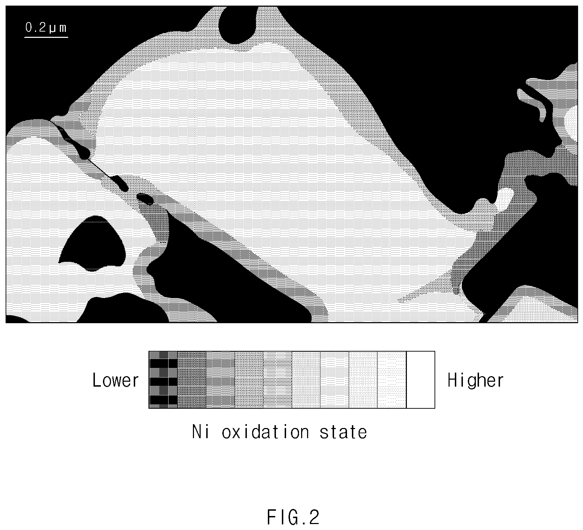

FIG. 1 illustrates the TEM-EELS analysis results showing the oxidation number distribution of Ni on the surface of the positive electrode active material of Example 1, and FIG. 2 illustrates the TEM-EELS analysis results showing the oxidation number distribution of Ni on the surface of the positive electrode active material produced according to Comparative Example 2. Through FIG. 1 and FIG. 2, it can be confirmed that Ni ions having a high oxidation number are mainly distributed on the surface of the positive electrode active material of Example 1 in which the high-temperature secondary sintering was performed, whereas Ni ions having a low oxidation number are mainly distributed on the surface of the positive electrode active material of Comparative Example 2 in which the process of washing with water was performed.

### Experimental Example 2: Measurement of amount of residual lithium

5 g of powder of the positive electrode active material produced in each of Examples 1 and 2and Comparative Examples 1 to 4 above was dispersed in 100 mL of water, and then titrated with 0.1 M HCl to measure changes in the pH value so as to obtain a pH titration curve. Using the pH titration curve, an amount of residual LiOH and an amount of residual LiCO₃ in each positive electrode active material were calculated, and a value obtained by adding the amounts was evaluated as the amount of residual lithium. The measurement results are shown in Table 1 below.

**[Table 1]**

| | Examp le 1 | Examp le 2 | Comparati ve Example 1 | Comparat ive Example 2 | Comparat ive Example 3 | Compara tive Example 4 |
|---|---|---|---|---|---|---|
| LiOH (wt%) | 0.18 | 0.12 | 0.33 | 0.15 | 0.35 | 0.16 |
| Li₂CO₃ (wt%) | 0.05 | 0.07 | 0.2 | 0.1 | 0.23 | 0.06 |
| Total amount of residual lithium (wt%) | 0.23 | 0.19 | 0.53 | 0.25 | 0.58 | 0.22 |

Through Table 1 above, it can be confirmed that the positive electrode active materials of Examples 1 and 2 produced according to the method of the present invention have a significantly smaller amount of residual lithium than the positive electrode active material of Comparative Example 1, and even without a process of washing with water, have a smaller amount of residual lithium than that of Comparative Example 2 in which the process of washing with water was performed. Meanwhile, in the case of the positive active material of Comparative Example 3 in which primary sintering was performed for a long time without the secondary sintering, the amount of residual lithium was rather increased. In the case of the positive active material of Comparative Example 4, the amount of residual lithium was similar to that of Example 1, but as shown in Experimental Example 4 below, the amount of gas generation increased.

### <Manufacturing of secondary battery>

The positive electrode active material produced in each of Examples 1 and 2 and Comparative Examples 1 to 4, a conductive material (carbon black, Denka), and a PVdF binder were mixed at a weight ratio of 96:2:2 in N-methylpyrrolidone to prepare a positive electrode slurry. The positive electrode slurry was applied on one surface of an aluminum current collector, dried at 130°C, and then roll-pressed to manufacture a positive electrode.

A lithium metal electrode was used as a negative electrode.

A separator was interposed between the positive electrode and the negative electrode to manufacture an electrode assembly, and the electrode assembly was placed inside a battery case, followed by injecting an electrolyte solution into the case to manufacture a coin-type half cell. The electrolyte solution was prepared by dissolving LiPF₆ with a 1 M concentration in a mixed organic solvent in which ethylene carbonate/dimethyl carbonate/diethyl carbonate were mixed in a volume ratio of 1:2:1, and then adding 2 wt% of vinylene carbonate (VC) thereto.

### Experimental Example 3: Evaluation of resistance properties according to SOC

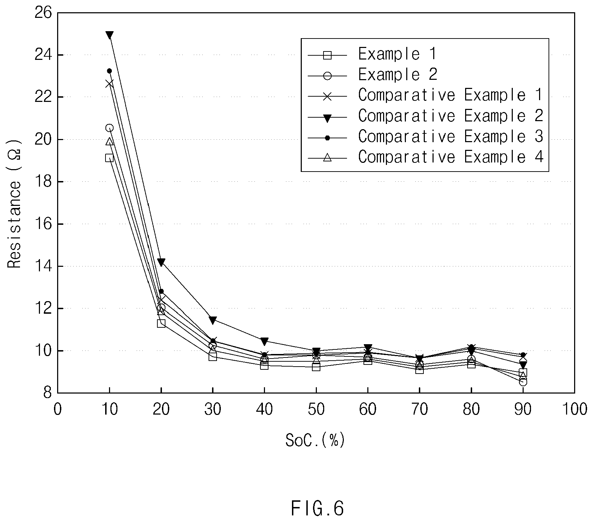

The coin-half cells manufactured using the positive electrode active materials of Examples 1 and 2 and Comparative Examples 1 to 4 were charged and discharged once at 2.5 to 4.25 V under the condition of 0.1 C/0.1 C, and then charged again to 4.25 V and discharged to SOC 10 by 10% of the cell discharge capacity while measuring the resistance (unit: Ω) according to SOC. At this time, the resistance was measured through changes in the voltage when a current of 2.5 C was applied for 10 seconds at each SOC. The measurement results are shown in FIG. 6.

Referring to FIG. 6, it can be confirmed that the cells to which the positive electrode active materials of Examples 1 and 2 produced according to the method of the present invention were applied have excellent resistance properties compared to the cells to which the positive electrode active materials of Comparative Examples 1 ~ 3 were applied. Particularly, in case of the cell to which the positive electrode active material of Example 1 in which the secondary sintering was performed at a temperature of 600°C to 800°C was applied, the discharge end resistance properties are superior to the cell to which the positive electrode active material of Comparative Example 4, which is in form of secondary particle, was applied. The cell to which the positive electrode active material of Example 2 in which the secondary sintering temperature was higher than 800°C was applied exhibited excellent resistance properties compared to the cells to which the positive electrode active materials of Comparative Examples 1~ 3 were applied, but exhibited poor resistance properties compared to the cell to which the positive electrode active materials of Example 1 or Comparative Example 4 was applied. It is determined that this is because the formation of a rock salt phase on the surface of lithium nickel-based oxide increases as the secondary sintering temperature increases, and as a result, the effect of improving surface resistance is slightly degraded.

### Experimental Example 4: Evaluation of amount of gas generated

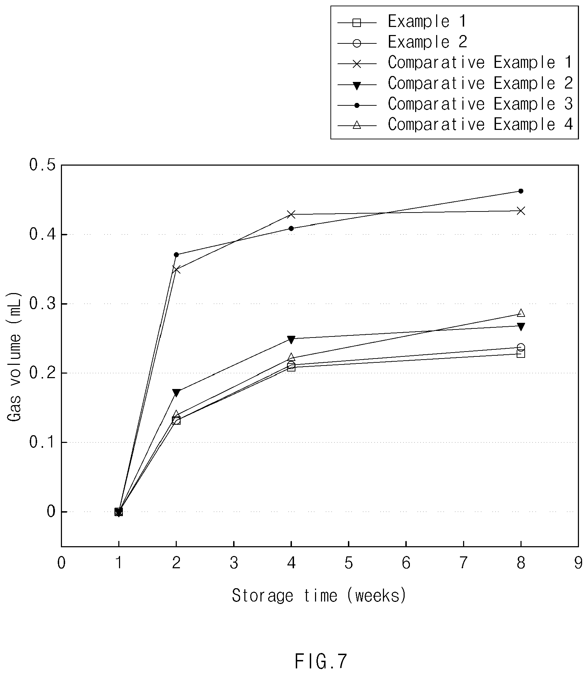

Each of the lithium secondary batteries manufactured above was charged to 4.25 V with 1 C in a CC-CV mode, and then the secondary battery was dissembled to separate the positive electrode. Then, 400 mg of the positive electrode and 15 µL of an electrolyte were put into a pouch-type battery case, and the battery case was sealed to manufacture a cell, and the cell was stored at 60°C for 8 weeks to measure a change in the cell volume (ΔCell volume, unit: ΔmL) before and after the high-temperature storage. The cell volume change was measured by placing the cell in water and then measuring the volume change of the water. The measurement results are shown in FIG. 7.

As illustrated in FIG. 7, the cells to which the positive electrode active materials of Examples 1 and 2 produced through the high-temperature secondary sintering without washing with water were applied exhibited significantly less volume change compared to the cells to which the positive electrode active materials of Comparative Examples 1 ~ 4 were applied.

In the case of the cell to which the positive active material of Comparative Examples 1 to 3 was applied, the amount of residual lithium in the positive active material was high, and the initial gas generation within 2 weeks after high-temperature storage was high. In the case of the cell to which the positive active material of Comparative Example 4 was applied with a small amount of residual lithium, the initial amount of gas generation was relatively small, but it was found that the amount of gas generation increased rapidly as the storage time increased.

## Claims

1. A method for producing a positive electrode active material, the method comprising:
(A) sintering a mixture of a transition metal precursor and a lithium raw material to prepare a lithium-nickel-based oxide in the form of at least one of single particles and pseudo-single particles, wherein each single particle consists of one nodule, and wherein each pseudo-single particle is a composite of 30 or fewer nodules;
(B) milling the lithium-nickel-based oxide; and
(C) sintering the lithium-nickel-based oxide at a temperature of 600°C to 900°C.

2. The method of claim 1, wherein the transition metal precursor is a nickel-cobalt-manganese hydroxide having a Ni content of 80 mol% or greater.

3. The method of claim 1, wherein the lithium-nickel-based oxide is represented by Formula 1 below:
[Formula 1] LiₐNi_{b}Co_{c}M¹_{d}M²ₑO₂
wherein in Formula 1 above, M¹ is Mn, Al, or a combination thereof, M² is Zr, W, Ti, Mg, Ca, Sr, and Ba, and 0.8≤a≤1.2, 0.8≤b<1, 0<c<0.2, 0<d<0.2, and 0≤e≤0.1.

4. The method of claim 1, wherein the sintering temperature in Step (A) is 800°C to 1000°C.

5. The method of claim 1, wherein the method does not comprise a step of washing with water.

6. The method of claim 1, wherein the sintering temperature in Step (C) is 600°C to 800°C.

7. The method of claim 1, wherein Step(A) is performed for 6 hours to 35 hours.

8. The method of claim 1, wherein Step (C) is performed for 2 hours to 10 hours.

9. A positive electrode active material, comprising: a lithium-nickel-based oxide in the form of at least one of single particles and pseudo-single particles,
wherein each single particle consists of one nodule,
wherein each pseudo-single particle is a composite of 30 or fewer nodules, and
wherein on the surface of the lithium-nickel-based oxide, a number of nickel ions having an oxidation number of +3 or higher is greater than a number of nickel ions having an oxidation number less than +3.

10. The positive electrode active material of claim 9, wherein the pseudo-single particle a composite of 2 to 10 nodules.

11. The positive electrode active material of claim 9, wherein the lithium-nickel-based oxide is represented by Formula 1 below:
[Formula 1] LiₐNi_{b}Co_{c}M¹_{d}M²ₑO₂
wherein in Formula 1 above, M¹ is Mn, Al, or a combination thereof, M² is Zr, W, Ti, Mg, Ca, Sr, and Ba, and 0.8≤a≤1.2, 0.83≤b<1, 0<c<0.17, 0<d<0.17, and 0≤e≤0.1.

12. The positive electrode active material of claim 9, wherein the positive electrode active material has residual lithium in an amount of 0.5 wt% or less.

13. The positive electrode active material of claim 9, wherein the positive electrode active material has an average particle diameter of the nodules of 0.5 um to 3 µm.

14. A positive electrode comprising a positive electrode active material layer including the positive electrode active material according to any one of claims 9 to 13.

15. A lithium secondary battery comprising the positive electrode of claim 14.
